# EUROPEAN PATENT SPECIFICATION

(11) **EP 0 875 561 B1**
(45) Date of publication and mention of the grant of the patent: **02.01.2004**
(21) Application number: 98300521.6
(22) Date of filing: 26.01.1998
(51) Int. Cl.: C12G 3/06

(54) **Process for preparing a saffron flavoured beverage in particular liqueur**
Verfahren zur Herstellung von Safrangetränken, insbesondere Spirituose
Procédé de préparation des boissons de safran, notamment l'eau-de-vie de safran

(30) Priority: 11.04.1997 US 837057
(43) Date of publication of application: 04.11.1998
(73) Proprietor: Dhandhania, Arun, Udaipur-313001, Rajasthan (IN)
(72) Inventor: Dhandhania, Arun, Udaipur-313001, Rajasthan (IN)
(74) Representative: Haley, Stephen

(56) References cited:
- FR-A- 2 593 030
- GB-A- 2 012 547
- SU-A- 1 745 125
- PATENT ABSTRACTS OF JAPAN vol. 095, no. 006, 31 July 1995 (1995-07-31) & JP 07 069908 A (NIPPON MEKTRON LTD), 14 March 1995 (1995-03-14)
- PATENT ABSTRACTS OF JAPAN vol. 095, no. 008, 29 September 1995 (1995-09-29) & JP 07 135936 A (YOSHIHIDE HAGIWARA), 30 May 1995 (1995-05-30)

## Description

The invention relates to a process of preparation of a saffron flavoured beverage and in particular of a liqueur flavoured with saffron.

More particularly, the invention is concerned with the strengthening the flavour of liqueur in beverage based on an admixture of blended Extra Neutral Alcohol and Saffron.

Instant tea is generally prepared from extract of black tea leaves followed by concentration if desired by drying. During this operation however a large part of volatile substances responsible for flavour is lost.

According to the present invention there is provided a process for preparing a saffron flavoured liqueur comprising the preparation of a flavouring agent containing saffron available in nature and capable of strengthening the flavour of the liqueur and characterised by the following steps:
cleaning the saffron;
grinding and/or converting it into saffron syrup distilled at 80°c in distilling apparatus;
condensing the decoction of a saffron liqueur having a strength of 9% to 54%;
subsequently cooling and adding this decoction to demineralised water in such quantities that the blended Extra Neutral Alcohol contents from 90 mg to 270 mg decoction of saffron based on the weight of the blended Extra Neutral Alcohol per bulk litre of the final saffron flavoured liqueur.

Preferably, the saffron has the strength of 0.4 gms per ml.

The decoction mixture may be heated to 80°C, any may then be condensed and cooled to room temperature, and kept for 24 hours at this temperature.

In some cases the lost volatile substances and flavour can be recovered by condensation and then reincorporation in the liqueur extract. In most cases the aforesaid volatile substances have undergone changes which makes them unsuitable for reincorporation. It is possible to add to a beverage a flavouring agent such as saffron.

In case the term beverage is used in the context of the invention applies both to liquid reconstitute beverage and also to the extract of the solid before and after drying which means that the flavouring agent may be added before, during and after reconstitution of the liquid beverage by addition of demineralised water.

In addition to at least saffron it has an aromatising agent which contain other substances like natural blended Extra Neutral Alcohol mixture preferably Ethyl alcohol.

The liqueur may further contain demineralised water obtained from ordinary water treated with resin so as to get demineralised water which is used in the proportion with the flavouring agent of 1:2.5. Thus the addition of the blended Extra Neutral Alcohol (E.N.A.) based on the following composition saffron is of 3 parts of Ethyl Alcohol, Demineralised water, 2,5%, Sucrose 1% to 5%.

Such quantities are for a blended Extra Neutral Alcohol having a strength in the range of 9% to 54% v/v and a saffron having a strength of 4 gms per ml or as required.

It is possible if desired to use the flavouring agent compositions such as those which we have just defined but which additionally contains Saffron to give flavour for liqueur already made.

In the first embodiment and in fusion of liquid constituent in any concentration, hot or cold is treated with a flavouring agent, saffron as flavouring agent. To this end the flavouring agent may be directly added, where it is a composition its constituents may be added either individually or in combination after which the same procedure can be adopted for a liquid extracts since the flavouring agent is relatively simple and available in nature and which has a special aroma consists of stable, substantially non-volatile substance the increase in temperature during drying it does not have any serious disadvantages.

The flavouring agent may contain in addition to saffron another flavouring agent. Such a further flavouring agent is more preferably sarkara which is added at a ratio of saffron to sarkara of 90 mg to 70 mg.

In one preferred embodiment of the flavouring agent, its constituents are added not as such but in solution or emulsion in diluent, the quantity of the flavouring agent may be incorporated being beverage being proportionately very small. It is preferred to use so called food grade diluent for e.g. water and/or any Polar Solvent.

The invention thus provides a process of preparation of flavoured beverage containing a flavouring agent capable of strengthening the flavour of the liqueur or beverage in such quantities the liqueur or that beverage contains from 90 mg to 270 mg decoction of saffron based on the weight of the blended Extra Neutral Alcohol further it contains food grade alcohol sucrose and demineralised water as herein described which are heated at 80°C and condensed and cooled at room temperature for 24 hours, so as to transform the Extra Neutral Alcohol into a flavoured beverage/liqueur.

## Claims

1. A process for preparing a saffron flavoured liqueur comprising the preparation of a flavouring agent containing saffron available in nature and capable of strengthening the flavour of the liqueur and **characterised by** the following steps:
cleaning the saffron;
grinding and/or converting it into saffron syrup distilled at 80°c in distilling apparatus;
condensing the decoction of a saffron liqueur having a strength of 9% to 54%;
subsequently cooling and adding this decoction to demineralised water in such quantities that the blended Extra Neutral Alcohol contents from 90 mg to 270 mg decoction of saffron based on the weight of the blended Extra Neutral Alcohol per bulk litre of the final saffron flavoured liqueur.

2. A process as claimed in claim 1 further comprising the step of adding saffron and sarkara in the flavouring agent.

3. The process as claimed in claim 1 or claim 2 wherein the saffron has the strength of 0.4 gms per ml.

4. A process as claimed in any of claims 1 to 3, **characterised in that** the decoction mixture is heated to 80°C, is condensed and cooled to room temperature and is kept for 24 hours at this temperature.

## Patentansprüche

1. Verfahren zur Herstellung eines Likörs mit Safrangeschmack, das die Zubereitung eines Geschmacksstoffs aufweist, der in der Natur verfügbaren Safran enthält und in der Lage ist, den Geschmack des Likörs zu verstärken, **gekennzeichnet durch** die folgenden Verfahrensschritte:
Reinigen des Safrans,
Mahlen und/oder Umwandeln des Safrans zu Safransirup, der bei 80°C in einem Destilliergerät destilliert wurde,
Kondensieren des Absuds eines Safranlikörs, der eine Stärke von 9 % bis 54 % aufweist,
nachfolgendes Kühlen und Hinzugeben des Absuds zu entmineralisiertem Wasser in einer solchen Menge, daß der gemischte extraneutrale Alhohol 90 mg bis 270 mg Absud des Safrans enthält, bezogen auf das Gewicht des gemischten extraneutralen Alkohols pro Schüttliter des fertigen Likörs mit Safrangeschmack.

2. Verfahren nach Anspruch 1, das zusätzlich den Schritt aufweist, Safran und Sarkara dem Geschmacksmittel zuzusetzen.

3. Verfahren nach Anspruch 1 oder 2, wobei der Safran eine Stärke von 0,4 g pro ml besitzt.

4. Verfahren nach Ansprüche 1 bis 3, **dadurch gekennzeichnet, daß** die Absudmischung auf 80°C erwärmt wird, kondensiert und auf Raumtemperatur gekühlt und für 24 Stunden auf dieser Temperatur gehalten wird.

## Revendications

1. Procédé pour préparer une liqueur à l'arôme de safran, comprenant la préparation d'un agent aromatisant contenant du safran, disponible à l'état naturel et capable de renforcer l'arôme de la liqueur, et **caractérisé par** les étapes suivantes consistant à :
nettoyer le safran ;
le broyer et/ou le convertir en un sirop de safran distillé à 80°C dans un dispositif de distillation ;
condenser la décoction d'une liqueur de safran ayant une teneur de 9% à 54% ;
ensuite refroidir et ajouter cette décoction à de l'eau déminéralisée dans des quantités telles que l'alcool extra neutre mélangé contienne de 90 mg à 270 mg de décoction de safran, sur base du poids de l'alcool extra neutre mélangé par litre de mélange en vrac de la liqueur à l'arôme de safran finale.

2. Procédé tel que revendiqué dans la revendication 1, comprenant en outre l'étape consistant à ajouter du safran et du sarkara dans l'agent aromatisant.

3. Procédé tel que revendiqué dans la revendication 1 ou la revendication 2, dans lequel le safran est à une teneur de 0,4 g par ml.

4. Procédé tel que revendiqué dans l'une quelconque des revendications 1 à 3, **caractérisé en ce que** le mélange de décoction est chauffé jusqu'à 80°C, est condensé et refroidi jusqu'à la température ambiante, et est maintenu pendant 24 heures à cette température.
